# EUROPÄISCHE PATENTANMELDUNG

(11) **EP 1 818 578 A1**
(43) Veröffentlichungstag der Anmeldung: **15.08.2007**
(21) Anmeldenummer: 07450016.6
(22) Anmeldetag: 07.02.2007
(51) Int. Cl.: F16J 1/00, F16J 15/32

(54) **Dichtung für Kolben oder dergleichen**

(30) Priorität: 09.02.2006 AT 942006 U
(71) Anmelder: IAG Industrie Automatisierungsgesellschaft mbH, 2722 Weikersdorf (AT)
(72) Erfinder: Pokorny, Dieter Patrik, 2722 Winzendorf (AT)
(74) Vertreter: Rippel, Andreas

(57) **Zusammenfassung**

Ein Dichtung für Kolben (1) oder dergleichen weist ein aus Kunststoff bestehendes Dichtelement (3) auf, das durch eine Feder (5) an die Zylinderwand (6) angedrückt wird.

Das Dichtelement (3) besitzt annähernd kegelförmige Gestalt und dessen Ende mit dem kleineren Durchmesser ist in einer hinterschnittenen Ausnehmung (2) des Kolbens (1) angeordnet und wird durch ein elastisches Element (4) gegen den äußeren Umfang der Ausnehmung (2) gedrückt und in dieser Ausnehmung (2) gehalten. Das Ende mit dem größeren Durchmesser wird durch die eingesetzte Feder (5) gegen die Zylinderwand (6) gedrückt.

Dadurch wird insbesondere ein Dichtelement (3) mit verhältnismäßig geringem Volumen ermöglicht.

## Beschreibung

Die Erfindung bezieht sich auf eine Dichtung für Kolben oder dergleichen mit einem aus Kunststoff bestehenden Dichtelement, das durch eine Feder an die Zylinderwand angedrückt wird.

Bei bekannten Dichtungen dieser Art besitzt das Dichtelement annähernd eine U-Form und die Feder ist in die vom U gebildete Tasche eingesetzt. Das gesamte Dichtelement wird in einem Absatz des Kolbens gehalten.

Nachteilig bei dieser bekannter Dichtung ist der verhältnismäßig große Platzbedarf zufolge der Größe des Dichtelementes. Dazu kommt, dass es notwendig ist, das Volumen der Dichtung so gering wie möglich zu halten, um über den gesamten Temperaturbereich einen niederen Reibwert zu erreichen.

Überdies hat sich in Versuchen gezeigt, dass Dichtungen, die wechselseitig mit Druck beaufschlagt werden, eine gewisse Verformung erfahren, die sich nicht selbst zurückstellt. Es kommt daher je nach Druckrichtung zu verschiedenen Reibwerten und es entsteht daraus auch ein gewisser Memory-Effekt, das heißt die Dichtung verbleibt in der zuletzt durch den Druck hervorgerufenen Stellung.

Die Erfindung hat es sich zum Ziel gesetzt, eine Dichtung zu schaffen, welche die aufgezeigten Nachteile nicht aufweist. Erreicht wird dies bei einer Dichtung der eingangs genannten Art dadurch, dass das Dichtelement annähernd kegelförmige Gestalt aufweist und dessen Ende mit dem kleineren Durchmesser in einer hinterschnittenen Ausnehmung des Kolbens angeordnet und durch ein elastisches Element gegen den äußeren Umfang der Ausnehmung gedrückt und in dieser Ausnehmung gehalten ist, wobei das Ende mit dem größeren Durchmesser durch die eingesetzte Feder gegen die Zylinderwand gedrückt wird.

Bei einer erfindungsgemäßen Dichtung ist das Volumen des Dichtelementes gegenüber den bekannten Dichtungen mehr als halbiert, die oben aufgezeigten Nachteile können daher nicht auftreten. Überdies ist die Baulänge der Dichtung geringer als die Baulänge der bekannten Dichtungen.

Bei einer zweckmäßigen Ausführungsform der Erfindung ist das elastische Element, welches das Dichtelement gegen den äußeren Umfang der Ausnehmung drückt, ein O-Ring.

Es ist aber auch möglich, dass dieses elastische Element eine Wendelfeder ist.

Die das Dichtelement an die Kolbenwand drückende Feder ist in an sich bekannter Weise eine Well- oder Mäanderfeder.

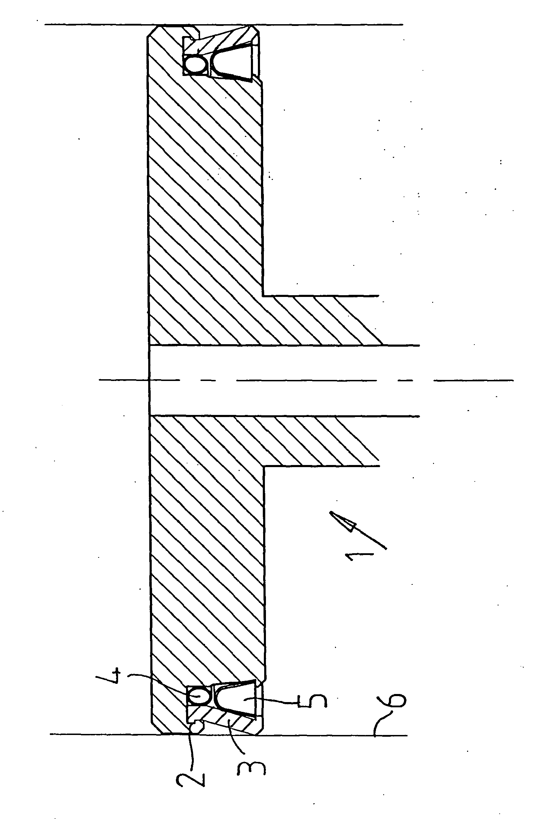

Nachstehend ist die Erfindung anhand eines in der Zeichnung dargestellten Ausführungsbeispieles näher beschrieben, ohne jedoch auf dieses Beispiel beschränkt zu sein. Dabei zeigt die einzige Zeichnung einen Schnitt durch einen Kolben, der mit einer erfindungsgemäßen Dichtung versehen ist.

In der Zeichnung ist der Kolben 1 eines Druckbegrenzungsventils schematisch dargestellt, das z.B. in der Abgasmeßtechnik eingesetzt wird. Die erfindungsgemäße Dichtung kann jedoch auch bei anderen Kolben und auch als Stangendichtung verwendet werden.

Der Kolben 1 weist an seinem Umfang eine hinterschnittene Ausnehmung 2 auf. Ein annähernd kegelförmiges Dichtelement 3 ist mit jenem Ende, das den kleineren Durchmesser besitzt in die hinterschnittene Ausnehmung 2 des Kolbens 1 eingesetzt. Ein O-Ring 4 drückt dieses Ende gegen den äußeren Umfang der Ausnehmung 2.

Zwischen dem Kolben 1 und dem Dichtelement 3 ist eine Mäanderfeder 5 eingesetzt, die das Dichtelement 3 bzw. dessen Ende mit dem größeren Durchmesser gegen die Zylinderwand 6 drückt.

Das Dichtelement 3 besteht insbesondere aus Kunststoff, vorzugsweise aus PTFE (Polytetrafluorethylen).

Im Rahmen der Erfindung sind zahlreiche Abänderungen möglich ohne dass der Rahmen der Erfindung verlassen wird. So könnte statt des O-Ringes 4 z.B. auch eine Wendelfeder verwendet werden. Auch statt der Mäanderfeder 5 ist die Verwendung einer anderen Art von Feder möglich.

## Patentansprüche

1. Dichtung für Kolben (1) oder dergleichen mit einem aus Kunststoff bestehenden Dichtelement (3), das durch eine Feder (5) an die Zylinderwand (6) angedrückt wird, **dadurch gekennzeichnet, dass** das Dichtelement (3) annähernd kegelförmige Gestalt aufweist und dessen Ende mit dem kleineren Durchmesser in einer hinterschnittenen Ausnehmung (2) des Kolbens (1) angeordnet und durch ein elastisches Element (4) gegen den äußeren Umfang der Ausnehmung (2) gedrückt und in dieser Ausnehmung (2) gehalten ist, wobei das Ende mit dem größeren Durchmesser durch die eingesetzte Feder (5) gegen die Zylinderwand (6) gedrückt wird.

2. Dichtung nach Anspruch 1, **dadurch gekennzeichnet, dass** das elastische Element (4) ein O-Ring ist.

3. Dichtung nach Anspruch 1, **dadurch gekennzeichnet, dass** das elastische Element (4) eine Wendelfeder ist.

4. Dichtung nach einem der Ansprüche 1 bis 3, **dadurch gekennzeichnet, dass** die das Dichtelement (3) an die Kolbenwand (6) drückende Feder (5) in an sich bekannter Weise eine Well- oder Mäanderfeder ist.
